# EUROPEAN PATENT SPECIFICATION

(11) **EP 2 850 833 B1**
(45) Date of publication and mention of the grant of the patent: **25.05.2016**
(21) Application number: 13727418.9
(22) Date of filing: 10.05.2013
(51) Int. Cl.: H04N 19/50, H04N 19/503, H04N 19/176, H04N 19/102, H04N 19/593, H04N 19/103, H04N 19/136, H04N 19/162, H04N 19/55, H04N 19/57

(54) **PROGRAMMABLE AND SCALABLE SEARCHING FOR CANDIDATE BLOCKS FOR INTER-CODING OR INTRA CODING**
PROGRAMMIERBARE UND SKALIERBARE SUCHE NACH KANDIDATENBLÖCKEN FÜR INTERCODIERUNG ODER INTRACODIERUNG
RECHERCHE PROGRAMMABLE ET EXTENSIBLE DE BLOCS CANDIDATS POUR CODAGE INTER OU CODAGE INTRA

(30) Priority: 14.05.2012 US 201261646808 P; 13.03.2013 US 201313801622
(43) Date of publication of application: 25.03.2015
(73) Proprietor: QUALCOMM INCORPORATED, San Diego, California 92121-1714 (US)
(72) Inventor: HUANG, Ling Feng, San Diego, California 92121-1714 (US); THIRUNAGESWARAM, Hari Ganesh, San Diego, California 92121-1714 (US); LALGUDI, Hariharan G., San Diego, California 92121-1714 (US); MOHAN, Sumit, San Diego, California 92121-1714 (US); WANG, Kai, San Diego, California 92121-1714 (US)
(74) Representative: Howe, Steven
(86) International application number: PCT/US2013/040532
(87) International publication number: WO 2013/173185

(56) References cited:
- US-A1- 2006 072 666
- US-A1- 2006 203 914
- US-A1- 2007 217 511

## Description

### BACKGROUND

### Technical Field

This disclosure relates to video coding, and in particular to efficient searching of candidate blocks for inter-coding and/or intra coding.

### Background

Digital video coding is used in wide range of devices, including digital televisions, digital direct broadcast systems, wireless communication devices, personal digital assistants (PDAs), laptop or desktop computers, digital cameras, digital recording devices, video gaming devices, cellular or satellite radio telephones, or the like. Digital video devices implement video compression techniques, such as MPEG-2, MPEG-4, or H.264/MPEG-4 Advanced Video Coding (AVC), to transmit and receive digital video more efficiently.

In general, video compression techniques perform spatial prediction, motion estimation and motion compensation to reduce or remove redundancy inherent in video data. In particular, intra-coding relies on spatial prediction to reduce or remove spatial redundancy in video within a given video frame. Inter-coding relies on temporal prediction to reduce or remove temporal redundancy in video within adjacent frames. For inter-coding, a video encoder performs motion estimation to track the movement of matching video blocks between two or more adjacent frames. Motion estimation generates motion vectors, which indicate the displacement of video blocks relative to corresponding video blocks in one or more reference frames. Motion compensation uses the motion vector to generate a prediction video block from a reference frame. After motion compensation, a residual video block is formed by subtracting the prediction video block from the original video block.

US 2006/203914 describes a motion estimation method utilizing a distance weighted search sequence.

US 2006/072666 describes a method for selecting output motion vector based on motion vector refinement and transcoder using the same.

US 2007/217511 describes a method and system for motion examination with multiple vector candidates.

### SUMMARY

The invention is defined in the claims to which reference are now directed. The systems, methods and devices of the disclosure each have several innovative aspects, no single one of which is solely responsible for the desirable attributes disclosed herein.

### BRIEF DESCRIPTION OF DRAWINGS

FIG. 1 is a block diagram illustrating a video encoding and decoding system.
FIG. 2 is a block diagram illustrating an example of a video encoder.
FIG. 3 is a block diagram illustrating an example of a video decoder.
FIG. 4A illustrates an example of motion vector candidates which may be used to identify the candidate blocks in the reference frame.
FIG. 4B illustrates an example of an order for searching candidate blocks.
FIG. 5 shows a process flow diagram for an exemplary candidate block search.
FIG. 6 illustrates an example of a low complexity search process.
FIG. 7 illustrates an example of a medium complexity search process using sub-block level predictors.
FIG. 8 shows an example of a high complexity search process using sub-block level predictors.
FIG. 9 illustrates a flowchart of an exemplary process for searching candidate blocks.
FIG. 10 illustrates a block diagram of an apparatus for performing motion estimation.
FIG. 11 illustrates a block diagram of a motion estimation unit including a candidate motion estimation processor.
FIG. 12 illustrates a process diagram of an efficient search of candidate blocks.

### DETAILED DESCRIPTION

In general, this disclosure is directed to techniques for efficient searching of candidate blocks for inter-coding and/or intra coding. The term "coding," as used herein, may refer to encoding, decoding or both. Although the techniques described in this disclosure may be applicable to a wide variety of practical applications, the disclosure will refer to digital video encoding and decoding for purposes of example and illustration.

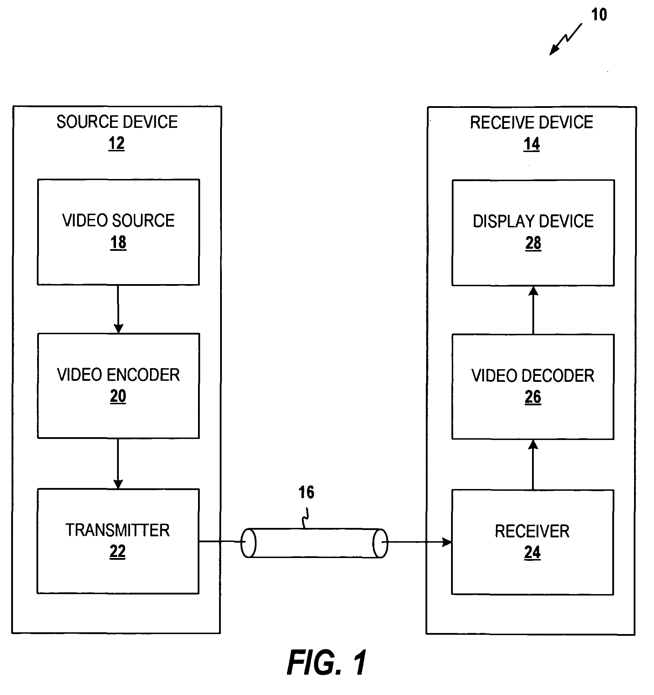

FIG. 1 is a block diagram illustrating a video encoding and decoding system. As shown in FIG. 1, system 10 includes a source device 12 that transmits encoded video to a receive device 14 via a communication channel 16. Source device 12 may include a video source 18, video encoder 20 and a transmitter 22. Receive device 14 may include a receiver 24, video decoder 26 and video display device 28. System 10 may be configured to apply techniques for efficient coding of digital video data in accordance with this disclosure.

In the example of FIG. 1, communication channel 16 may comprise any wireless or wired communication medium, such as a radio frequency (RF) spectrum or one or more physical transmission lines, or any combination of wireless and wired media. Channel 16 may form part of a packet-based network, such as a local area network, wide-area network, or a global network such as the Internet. Communication channel 16 generally represents any suitable communication medium, or collection of different communication media, for transmitting video data from source device 12 to receive device 14. In some implementations, the communication channel 16 is bidirectional. In such implementations, the source device 12 may receive feedback from the receive device 14. The feedback may be used as an input to the encoding process.

Source device 12 generates video for transmission to receive device 14. In some cases, however, the source device 12 and the receive device 14 may operate in a substantially symmetrical manner. For example, each of the source device 12 and the receive device 14 may include video encoding and decoding components. Hence, system 10 may support one-way or two-way video transmission between video devices, such as the source device 12 and the receive device 14, e.g., for video streaming, video broadcasting, or video telephony. For other data compression and coding applications, the source device 12 and/or the receive device 14 could be configured to send and receive, or exchange, other types of data, such as image, speech or audio data, or combinations of two or more of video, image, speech and audio data. Accordingly, discussion of video encoding and decoding applications is provided for purposes of illustration and should not be considered limiting of the various aspects of the disclosure as broadly described herein.

Video source 18 may include a video capture device, such as one or more video cameras, a video archive containing previously captured video, or a live video feed from a video content provider. As a further alternative, video source 18 may generate computer graphics-based data as the source video, or a combination of live video and computer-generated video. In some cases, if video source 18 is a camera, the source device 12 and the receive device 14 may form so-called camera phones or video phones. Hence, in some aspects, the source device 12, the receive device 14, or both may form a wireless communication device handset, such as a mobile telephone handset. In each case, the captured, pre-captured or computer-generated video may be encoded by video encoder 20 for transmission from video source device 12 to video decoder 26 of video receive device 14 via transmitter 22, channel 16 and receiver 24. Display device 28 may include any of a variety of display devices such as a liquid crystal display (LCD), plasma display or organic light emitting diode (OLED) display.

Video encoder 20 and video decoder 26 may be configured to support scalable video coding (SVC) for spatial, temporal and/or signal-to-noise ratio (SNR) scalability. In some aspects, video encoder 20 and video decoder 26 may be configured to support fine granularity SNR scalability (FGS) coding for SVC. Encoder 20 and decoder 26 may support various degrees of scalability by supporting encoding, transmission and decoding of a base layer and one or more scalable enhancement layers. For scalable video coding, a base layer carries video data with a minimum level of quality. One or more enhancement layers carry additional bit-stream to support higher spatial, temporal and/or SNR levels.

Video encoder 20 and video decoder 26 may operate in part according to techniques described herein and in part according to a video compression standard, such as MPEG-2, MPEG-4, ITU-T H.263, or ITU-T H.264/MPEG-4 Advanced Video Coding (AVC). For example, the techniques used herein may be used to augment or replace the respective techniques used in a video compressions standard as would be understood by one of skill in the art. Although not shown in FIG. 1, in some aspects, video encoder 20 and video decoder 26 may be integrated with an audio encoder and decoder, respectively, and include appropriate MUX-DEMUX units, or other hardware and software, to handle encoding of both audio and video in a common data stream or separate data streams. If applicable, MUX-DEMUX units may conform to the ITU H.223 multiplexer protocol, or other protocols such as the user datagram protocol (UDP).

The H.264/MPEG-4 (AVC) standard was formulated by the ITU-T Video Coding Experts Group (VCEG) together with the ISO/IEC Moving Picture Experts Group (MPEG) as the product of a collective partnership known as the Joint Video Team (JVT). The H.264 standard is described in ITU-T Recommendation H.264, Advanced video coding for generic audiovisual services, by the ITU-T Study Group, and dated March 2005, which may be referred to herein as the H.264 standard or H.264 specification, or the H.264/AVC standard or specification.

In some aspects, for video broadcasting, the techniques described in this disclosure may be applied to Enhanced H.264 video coding for delivering real-time video services in terrestrial mobile multimedia multicast (TM3) systems such as via a wireless video broadcast server or wireless communication device handset. In some implementations, the video may be broadcasted according to other standards such as DVB-H (digital video broadcast-handheld), ISDB-T (integrated services digital broadcast-terrestrial), or DMB (digital media broadcast). Hence, the source device 12 may be a mobile wireless terminal, a video streaming server, or a video broadcast server. However, techniques described in this disclosure are not limited to any particular type of broadcast, multicast, or point-to-point system. In the case of broadcast, the source device 12 may broadcast several channels of video data to multiple receive device, each of which may be similar to the receive device 14 of FIG. 1.

Video encoder 20 and video decoder 26 each may be implemented as one or more microprocessors, digital signal processors (DSPs), application specific integrated circuits (ASICs), field programmable gate arrays (FPGAs), discrete logic, software, hardware, firmware or any combinations thereof. Hence, each of video encoder 20 and video decoder 26 may be implemented at least partially as an integrated circuit (IC) chip or device, and included in one or more encoders or decoders, either of which may be integrated as part of a combined encoder/decoder (CODEC) in a respective mobile device, subscriber device, broadcast device, server, or the like. In addition, the source device 12 and the receive device 14 each may include appropriate modulation, demodulation, frequency conversion, filtering, and amplifier components for transmission and reception of encoded video, as applicable, including radio frequency (RF) wireless components and antennas sufficient to support wireless communication. For ease of illustration, however, such components are not shown in FIG. 1.

A video sequence includes a series of video frames. Video encoder 20 operates on blocks of pixels within individual video frames in order to encode the video data The video blocks may have fixed or varying sizes, and may differ in size according to a specified coding standard. Each video frame includes a series of slices. Each slice may include a series of macroblocks, which may be arranged into sub-blocks. As an example, the ITU-T H.264 standard supports intra prediction in various block sizes, such as 16 by 16, 8 by 8, 4 by 4 for luma components, and 8 by 8 for chroma components, as well as inter prediction in various block sizes, such as 16 by 16, 16 by 8, 8 by 16, 8 by 8, 8 by 4, 4 by 8 and 4 by 4 for luma components and corresponding scaled sizes for chroma components.

Smaller video blocks can provide better resolution, and may be used for locations of a video frame that include higher levels of detail. In general, macroblocks (MBs) and the various sub-blocks may be considered to be video blocks. In addition, a slice may be considered to be a series of video blocks, such as MBs and/or sub-blocks. Each slice may be an independently decodable unit. After prediction, a transform may be performed on the 8 by 8 residual block or 4 by 4 residual block, and an additional transform may be applied to the DC coefficients of the 4 by 4 blocks for chroma components or luma component if an intra_16_by_16 prediction mode is used.

Video encoder 20 and/or video decoder 26 of system 10 of FIG. 1 may be configured to incorporate the aspects described below for efficient searching of candidate blocks for inter-coding and/or intra coding to reduce processing overhead, processing complexity, and/or power consumption.

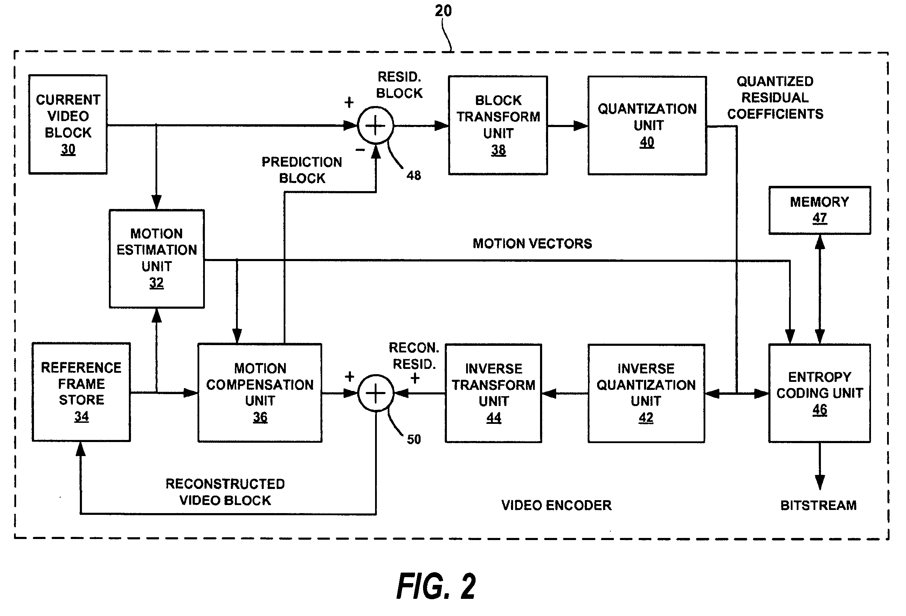

FIG. 2 is a block diagram illustrating an example of a video encoder. Video encoder 20 may be formed at least in part as one or more integrated circuit devices, which may be referred to collectively as an integrated circuit device. In some aspects, video encoder 20 may form part of a wireless communication device handset or broadcast server. Video encoder 20 may perform intra- and inter-coding of blocks within video frames. Intra-coding relies on spatial prediction to reduce or remove spatial redundancy in video within a given video frame. Inter-coding relies on temporal prediction to reduce or remove temporal redundancy in video within adjacent frames of a video sequence. For inter-coding, video encoder 20 performs motion estimation to track the movement of matching video blocks between adjacent frames.

As shown in FIG. 2, video encoder 20 receives a current video block 30 within a video frame to be encoded. In the example of FIG. 2, video encoder 20 includes motion estimation unit 32, reference frame store 34, motion compensation unit 36, block transform unit 38, quantization unit 40, inverse quantization unit 42, inverse transform unit 44 and entropy encoding unit 46. Video encoder 20 also may include memory including memory 47. An in-loop deblocking filter (not shown) may be applied to filter blocks to remove blocking artifacts. Video encoder 20 also includes adder 48 and adder 50. FIG. 2 illustrates the temporal prediction components of video encoder 20 for inter-coding of video blocks. Although not shown in FIG. 2 for ease of illustration, video encoder 20 also may include spatial prediction components for intra-coding of some video blocks.

Motion estimation unit 32 compares video block 30 to blocks in one or more adjacent video frames to generate one or more motion vectors. The adjacent frame or frames may be retrieved from reference frame store 34, which may comprise any type of memory or data storage device to store video blocks reconstructed from previously encoded blocks. Motion estimation may be performed for blocks of variable sizes, e.g., 16 by 16, 16 by 8, 8 by 16, 8 by 8 or smaller block sizes.

In operation, motion estimation unit 32 identifies one or more blocks in adjacent frames that most closely match the current video block 30, e.g., based on a rate distortion model, and determines displacement between the blocks in adjacent frames and the current video block. On this basis, motion estimation unit 32 produces one or more motion vectors (MV) that indicate the magnitude and trajectory of the displacement between current video block 30 and one or more matching blocks from the reference frames used to code current video block 30.

Motion vectors may have half- or quarter-pixel precision, or even finer precision, allowing video encoder 20 to track motion with higher precision than integer pixel locations and obtain a better prediction block. In some implementations, these finer precision vectors may be referred to as subsamples. When motion vectors with fractional pixel values are used, interpolation operations are carried out in motion compensation unit 36. Motion estimation unit 32 identifies the best block partitions and motion vector or motion vectors for a video block using certain criteria, such as a rate-distortion model. For example, there may be more than motion vector in the case of bidirectional prediction. Using the resulting block partitions and motion vectors, motion compensation unit 36 forms a prediction video block.

Video encoder 20 forms a residual video block by subtracting the prediction video block produced by motion compensation unit 36 from the original, current video block 30 at adder 48. Block transform unit 38 applies a transform, such as the 4 by 4 or 8 by 8 integer transform used in H.264/AVC, to the residual block, producing residual transform block coefficients. Quantization unit 40 quantizes the residual transform block coefficients to further reduce bit rate. Entropy encoding unit 46 entropy codes the quantized coefficients to even further reduce bit rate.

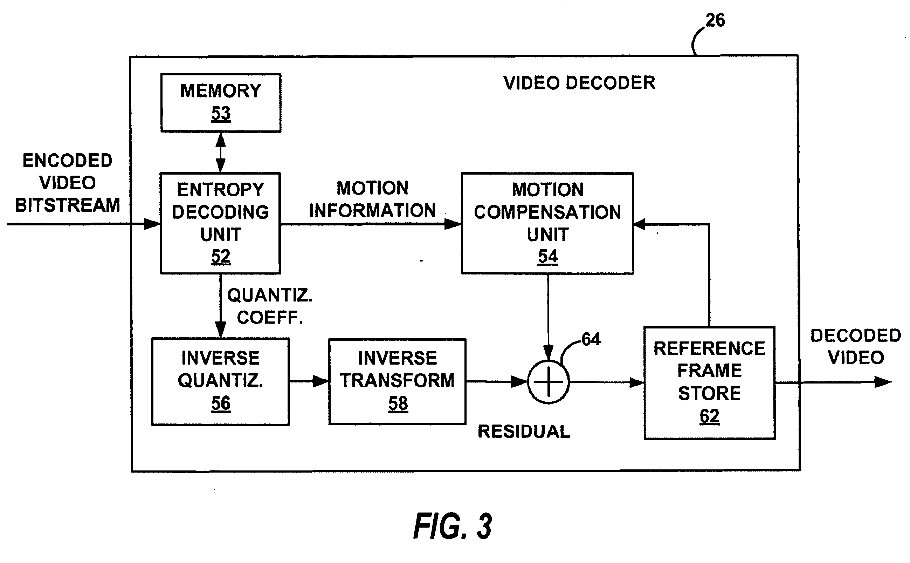

In general, video decoder 26 performs inverse operations, including decoding and parsing, to decode and reconstruct the encoded video, as will be described, e.g., with reference to FIG. 3.

Inverse quantization unit 42 and inverse transform unit 44 apply inverse quantization and inverse transformation, respectively, to reconstruct the residual block. Adder 50 adds the reconstructed residual block to the motion compensated prediction block produced by motion compensation unit 36 to produce a reconstructed video block for storage in reference frame store 34. The reconstructed video block is used by motion estimation unit 32 and motion compensation unit 36 to encode a block in a subsequent video frame.

FIG. 3 is a block diagram illustrating an example of a video decoder. Video decoder 26 may be formed at least in part as one or more integrated circuit devices, which may be referred to collectively as an integrated circuit device. In some aspects, video decoder 26 may form part of a wireless communication device handset. Video decoder 26 may perform intra- and inter-decoding of blocks within video frames. As shown in FIG. 3, video decoder 26 receives an encoded video bit-stream from a receiver 24 (FIG. 1) that has been encoded by video encoder 20. In the example of FIG. 3, video decoder 26 includes entropy decoding unit 52, motion compensation unit 54, inverse quantization unit 56, inverse transform unit 58, and reference frame store 62. Video decoder 26 also may include memory, including memory 53, which may be used by entropy decoding unit 52 for storage and retrieval of coding data. Video decoder 26 also may include an in-loop deblocking filter (not shown) that filters the output of adder 64. Video decoder 26 also includes adder 64. FIG. 3 illustrates the temporal prediction components of video decoder 26 for inter-decoding of video blocks. Although not shown in FIG. 3, video decoder 26 also may include spatial prediction components for intra-decoding of some video blocks.

Entropy decoding unit 52 receives the encoded video bit-stream and decodes from the bit-stream quantized residual coefficients, macroblock coding mode and motion information, which may include motion vectors and block partitions.

Motion compensation unit 54 receives the motion vectors and block partitions and one or more reconstructed reference frames from reference frame store 62 to produce a prediction video block. Inverse quantization unit 56 inverse quantizes, i.e., de-quantizes, the quantized block coefficients. Inverse transform unit 58 applies an inverse transform, e.g., an inverse DCT or an inverse 4 by 4 or 8 by 8 integer transform, to the coefficients to produce residual blocks. The prediction video blocks are then generated by adder 64 with the residual blocks to form decoded blocks. A deblocking filter (not shown) may be applied to filter the decoded blocks to remove blocking artifacts. The filtered blocks are then placed in reference frame store 62, which provides reference frame for decoding of subsequent video frames and also produces decoded video to drive display device 28 (FIG. 1).

As discussed above, video encoder 20 may perform one or both of intra-coding and inter-coding or other coding techniques that involve coding a block (also referred to as a "macroblock") by searching for matching blocks to blocks in the same frame or adjacent frames. It should be noted that, as discussed above, different macroblocks may be of different size and/or shape. The blocks that are to be checked or searched as potential matching blocks may be referred to as "candidate blocks" herein.

When encoding a high resolution and/or high frame rate video, the video encoder 20 may have a limited amount of time to process images of the video. This means that there may be a limited processing time for each macroblock of each image.

Further, in some instances, the video encoder 20, in addition to encoding a high resolution and/or high frame rate video, may be used to encode a low resolution and/or low frame rate video. Accordingly, techniques for systems and methods are described herein that provide efficient searching of candidate blocks for coding that reduce processing time and further, that are adjustable (e.g., programmable), for example, in terms of how long a search is performed and at what complexity level depending, for example, on aspects of the video to be coded (e.g., resolution, frame rate, etc.). Various aspects are described herein. It should be noted that these aspects may be performed in any combination including or excluding any aspects by the video encoder 20 or other suitable hardware and/or software.

In some aspects, the video encoder 20 is configured to scale with the format (e.g., frame size and frame rate) of the video to be encoded. In particular, the video encoder 20 may be programmable in that it is configured to adjust the number of processing cycles that are used in order to search candidate blocks. The number of processing cycles used may be adjusted manually, such as by changing programming

(e.g., adjusting register values, arithmetic logic, etc.), associated with the video encoder 20 to reflect the appropriate number of processing cycles. In some aspects, the number of processing cycles used may be adjust automatically, such as based on the format (e.g., frame size, frame rate, etc.) of the video to be encoded and/or the coding scheme (e.g., standard) used to encode the video (e.g., H.264, VP8, MPEG-4, etc.). For example, a higher frame rate and/or larger frame size (e.g., above a threshold) may take more processing time to encode overall, so a fewer number of processing cycles may be allocated to search candidate blocks. Similarly, a lower frame rate and/or smaller frame size (e.g., below a threshold) may take less processing time to encode overall, so a greater number of processing cycles may be allocated to search candidate blocks.

In some aspects, the video encoder 20 may also be programmable in that it is configured to search candidate blocks according to an adjustable priority scheme. For example, the priority scheme may be adjusted based on the coding scheme (e.g., H.264, VP8, MPEG-4, etc.) used to encode the video data Therefore, the order in which the search of candidate blocks is performed can be optimized to a particular coding scheme. For example, one priority scheme may comprise first searching candidate blocks near the center of a frame of video and later search candidate blocks at the periphery of the frame. Additionally or alternatively, inter-frame candidate blocks (using temporal predictors) may be searched before intra-frame candidate blocks (using spatial predictors), or vice versa, depending on the coding scheme. For example, in some coding schemes inter-frame candidate blocks may be coded using fewer bits than intra-frame candidate blocks and therefore may be searched first. In another example, candidate blocks may be searched using one or more methods (e.g., inter-frame (temporal) searching, intra-frame (spatial) searching, sub-sample search engine (SSE) searching, motion vector prediction (MVP) searching, etc.). These one or more methods may be searched in a particular order depending on the coding scheme used for encoding.

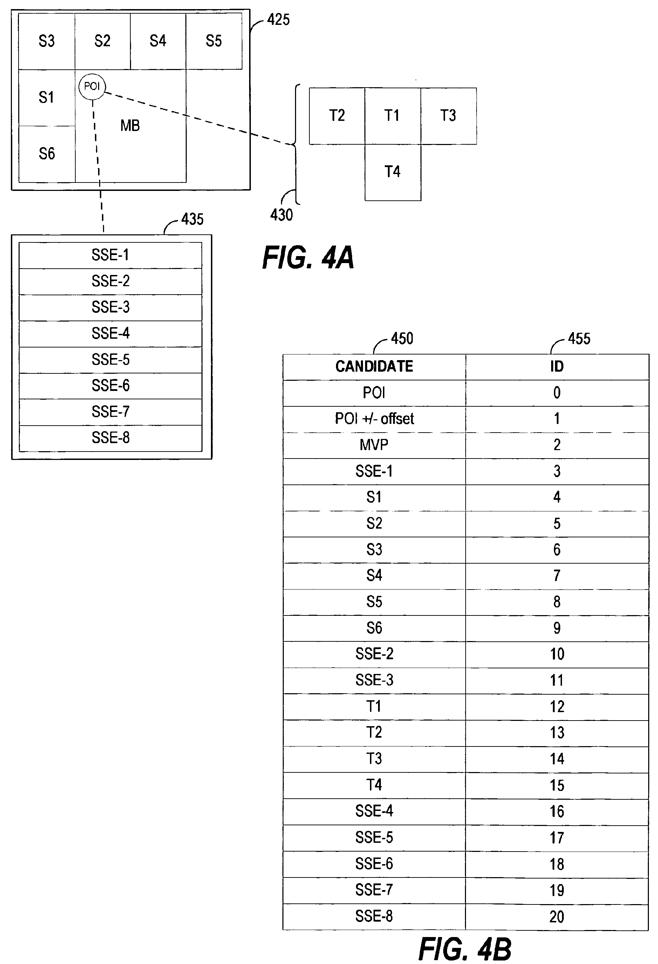

FIG. 4A illustrates an example of motion vector candidates which may be used to identify the candidate blocks in the reference frame. A candidate block is a group of pixel values in the reference frame, for example, a macroblock of the reference frame. Motion vector candidates and candidate blocks may be used interchangeably. A point of interest (POI) is shown within a macroblock (MB) of a frame 425. In addition to the point of interest, several additional blocks may be used as candidate blocks. For example, in FIG. 4A, temporal predictor values T1, T2, T3, and T4 430 are provided.

Several spatial predictors may also be included near the point of interest for the frame. As shown in FIG. 4A, spatial predictor values S1, S2, S3, S4, S5, and S6 are provided. In some implementations, subsample search engine values 435 may also be provided. The point of interest shown in FIG. 4A is associated with eight subsample search engine values identified by SSE-1, SSE-2, SSE-3, SSE-4, SSE-5, SSE-6, SSE-7, and SSE-8. As discussed above, candidate blocks available for searching may include more or fewer values then shown in FIG. 4A.

FIG. 4B illustrates an example of an order for searching candidate blocks. The order shown in FIG. 4B is based on the candidate blocks identified in FIG. 4A. Each motion vector candidate 450 is associated with an identifier (ID) 455. The ordering of the candidate blocks 450 does not necessarily mean the candidate blocks will be searched. As will be described, some candidate blocks 450 may be omitted from searching for a specific portion of video data.

In the implementation shown in FIG. 4B, the candidate blocks 450 are organized in an order of preferred searching. The first block to be searched is point of interest. The second block to search is a block offset from the point of interest. For example, the offset may be along a vertical and/or horizontal offset. The third block to search is the motion vector prediction (MVP). The MVP candidate corresponds to searching candidate blocks around a predicted motion vector. The fourth block to search is the candidate blocks around an area identified by a first sub-sample search engine candidate block (SSE-1). Each of the spatially predicted (e.g., intra-frame) blocks (S1 - S6) may be searched next. Candidate blocks around SSE-2 and SSE-3 may be searched next, followed by temporal (inter-frame) candidate blocks T1 through T4. The remaining candidate blocks identified by SSE-4 through SSE-8 may then be then searched.

The ordering shown in FIG. 4B is just one example of an ordering and may be beneficially used with a particular coding scheme, frame size, and frame rate. The ordering may be used to identify the progression of blocks to use for searching the candidate blocks 450.

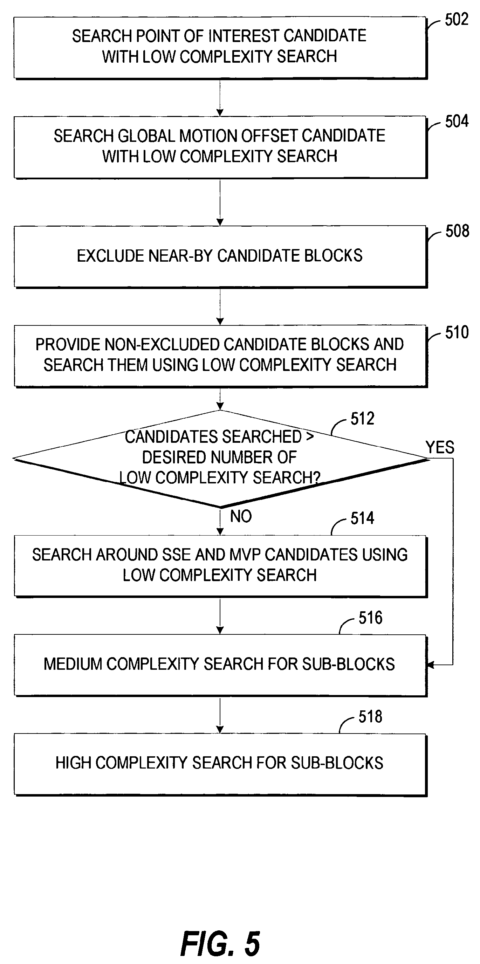

FIG. 5 shows a process flow diagram for an exemplary candidate block search. The process shown in FIG. 5 may be performed by the devices described herein, such as the source device 12 via, for example, the video encoder 20. The process shown in FIG. 5 will take as an input an ordering of candidate blocks such as that shown in FIG. 4B. For ease of explanation, FIG. 5 will be described using the ordering of FIG. 4B. However, it will be understood that as the ordering may differ in some implementations, the process of FIG. 5 may be applied to a variety of orderings. A second input to the process is the number of candidates to search using each of three methods.

In some aspects, the video encoder 20 may be programmatically configured to perform the process shown. The video encoder 20 may be configured to prioritize searching candidate blocks that are dissimilar from each other. For example, some candidate blocks may be near the same location in a given frame spatially, and therefore may include similar image data. Searching these similar candidate blocks may waste valuable memory (e.g., random access memory (RAM)) bandwidth, processing power, and/or other source device 12 resources. Accordingly, the video encoder 20 may be configured ignore (e.g., exclude) searching candidate blocks near a location where a search of a candidate block has already been performed.

The exclusion may be based on a configurable distance value or threshold. Accordingly, if several candidate blocks are within the distance value or threshold distance (e.g., measured from the center of the candidate blocks, measured from the closest peripheries of the candidate blocks, etc.) from each other spatially, less than all (e.g., one) of such candidate blocks may be searched for a potential match to a macroblock, while the other such candidate blocks are excluded from the search. In some aspects, the selection/removal of blocks to define the candidate blocks that are to be searched may be performed in parallel with other processing (e.g., motion vector processing) to be performed by the video encoder 20 or other hardware components so as to maximize the use of processing cycles. For example, as will be discussed further below, certain candidate blocks of FIG. 4B may be removed from the search process due to similarity between candidate blocks that would be searched.

In some aspects, the video encoder 20 is programmable in that it is configured to have an adjustable search complexity in searching candidate blocks. For example, a high complexity search may lead to a lower number of candidates searched, while a low complexity search may lead to a higher number of candidates searched. Accordingly, the video encoder 20 can be programmed to be tailored to an image being searched. For example, for a higher resolution video macroblocks of a larger size may have motion vectors that are similar (e.g., larger blocks are spatially similar within a frame or temporally similar between frames) than a lower resolution video, and therefore a low complexity search may be utilized to search more candidates. A lower resolution video, however, may not have macroblocks of a larger size with similar motion vectors, but rather may only have smaller macroblocks with similar motion vectors. Accordingly, for such lower resolution video, a high complexity search may be utilized that searches fewer candidates that are of better quality. Therefore, the video encoder 20 may be programmable/configured to adjust complexity in searching candidate blocks by adjusting the size of candidate blocks (e.g., 16 by 16, 16 by 8, 8 by 16, 8 by 8, etc.) searched. The size may be adjusted based on the image to be searched (e.g., the resolution of the image, frame rate of video, etc.). Further, one or more searches of one or more sizes in different combinations may be used depending on the image to be searched.

In FIG. 5, at node 502, the point of interest candidate is search using the low complexity search. In an implementation where the macroblock is a 16 by 16 macroblock, the point of interest will be searched using a 16 by 16 block.

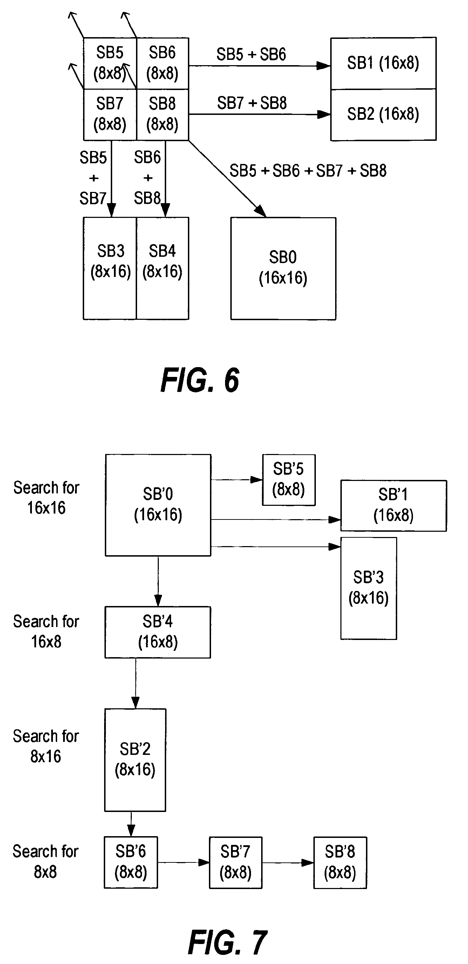

FIG. 6 illustrates an example of a low complexity search process. In some implementations, an image may be searched based only on candidate blocks of size 16 by 16. Because the motion value is determined at the macroblock level, each sub-block included in the macroblock is presumed to have the same motion vector.

In the low complexity search, the entire area in the 16 by 16 candidate block is searched to match the block and smaller sub-blocks, cost comes for free (e.g., without computation cost). Since the same motion vector is used for all blocks, the accuracy of the search may be diminished. Such aspects may be used, for example, for larger frame size and/or higher frame rates (e.g., above a threshold). In another aspect, some blocks may be searched based on candidate blocks of size 16 by 16, others based on 16 by 8, others based on 8 by 16, and yet others based on 8 by 8. These can be done using medium and/or high complexity searches as will be described in subsequent paragraphs.

The 16 by 16 candidate block may be divided into four equal sub-blocks of size 8 by 8. As shown in FIG. 6, sub-block 5 (SB5), sub-block 6 (SB6), sub-block 7 (SB7), and sub-block 8 (SB8) are included in the 16 by 16 candidate block. Each sub-block has an associated cost value. In one example, the cost value can be sum of absolute difference between the pixels. The cost values for these sub-blocks may be added to create cost of larger sub-blocks. For example, SB5 and SB6 may be added to generate sub-block 1 (SB1) having dimensions of 16 by 8. SB7 and SB8 may be added to generate sub-block 2 (SB2) also a 16 by 8 sub-block. Addition of SB5 and SB7 produces sub-block 3 (SB3) having dimensions of 8 by 16. SB6 and SB8 may be added to generate sub-block 4 (SB4), also an 8 by 16 sub-block. The cost value for the entire candidate block is represented by sub-block 0 (SB0), which is not necessarily a sub-block, but rather the aggregation of the cost values for each constituent sub-block, SB5-SB8. SB0 has the dimensions of 16 by 16.

Returning to FIG. 5, for a given macroblock, frame, or video input, a global motion value may be provided. The global motion value indicates an overall displacement of pixels for the macroblock, frame, or video input. At node 504, a global motion offset candidate is searched using the low complexity search. If the global motion offset value is zero, then this search will be the same as that performed at node 502. In such implementations, the search at node 504 may be skipped. If the global motion offset is not zero (e.g., has an x offset and/or y offset value), the candidate block located at the point of interest plus-or-minus the global offset value is searched.

Searching the point of interest candidate using low complexity search at node 502 provides a coarse grained determination of a match because the comparison is based on a search having only 16 by 16 predictors for the macroblock.

At node 508, candidate blocks are excluded from further consideration. The exclusion is based on a distance for the candidate block to other candidate blocks. One distance that may be considered is the pixel distance to other candidate blocks. If the distance for the candidate block is less than a specified threshold, the candidate block may be excluded from further consideration as the motion associated with the candidate is so small as compared to other candidate blocks. The threshold may be specified along an x and/or y motion value. The threshold may be statically configured for the device (e.g., stored in memory), user configured, or dynamically determined based on, for example, the input video to be encoded, operating conditions for the device (e.g., load, network traffic, resource availability), and the like.

If this too many candidates are excluded from consideration, then the video encoder 20 can be programmed to search around important candidates, like the point of interest, MVP, sub-sample search engine candidates, such that the allotted searching time may be used for the macroblock. As discussed above, different coding schemes may benefit from a different ordering as would be understood by one of skill in the art.

At node 510, the motion vectors for the non-excluded candidate blocks are searched using the low complexity search.

As some of the candidate blocks may have been excluded from consideration, the number of candidate block which need to have cost values generated may be smaller than performing the calculation for every candidate block. This provides, as one non-limiting benefit, a reduction in resources consumed to encode the video data because processing fewer candidate blocks may require less processing time, power, memory, etc. than processing the entire set of candidate blocks. In some implementations, the motion vector values may be generated by a sum of the absolute difference engine coupled with the candidate motion vector processor. The process may obtain the motion vector information for the non-excluded candidates using or in combination with other estimation procedures such as sum of squared differences, sum of absolute transformed distances, or the like.

At decision node 512, a determination is made as to whether the number of candidate blocks searched via nodes 502 through 510 is greater than the desired number of candidates to be searched using a low complexity search

If the number of candidate blocks searched is not greater than the desired number of low complexity searches, the process continues to node 514. At node 514, the candidate blocks around non-excluded sub-sample search engine and motion vector predictor candidate blocks are searched using low complexity search. This allows additional searching around sub-sample and motion vector predictor candidate blocks which have not been excluded and thus may represent promising matches for the current macroblock. The process then continues to node 516 as will be described below. Returning to decision node 512, if the number of candidate blocks searched is less than or equal to the desired number of medium complexity searches, the process continues to node 516.

At node 516, candidate blocks are searched medium complexity search such as that shown in FIG. 7.

FIG. 7 illustrates an example of a medium complexity search process using sub-block level predictors. The search shown in FIG. 7 may include performing 1 16 by 16 search, 1 16 by 8 search, 1 8 by 16 search, and 3 8 by 8 searches. The search of FIG. 7 may have a higher level of computational complexity as compared to the search shown in FIG. 6. Unlike the search of FIG. 6, the sub-blocks are not presumed to all have the same motion vector candidate. Instead, in FIG. 7, sub-block 0 (SB'0), sub-block 5 (SB'5) corresponding to a sub-block located in the upper-left most corner of the candidate block, sub-block 1 (SB'1) corresponding to an 16 by 8 sub-block located in the top row of the candidate block, and sub-block 3 (SB'3) corresponding to an 8 by 16 sub-block located in the left-hand column of the candidate block are presumed to have the same motion value. Accordingly, determination of the cost for SB'0 also provides the cost for SB'5, SB'1, and SB'3.

An additional calculation is needed to generate a cost for the 16 by 8 sub-block, sub-block 4 (SB'4). A further calculation is performed to generate a cost value for the 8 by 16 sub-block, sub-block 2 (SB'2). Three calculations are needed to generate cost values for each of the 8 by 8 sub-blocks, sub-block 6 (SB'6), sub-block 7 (SB'7), and sub-block 8 (SB'8).

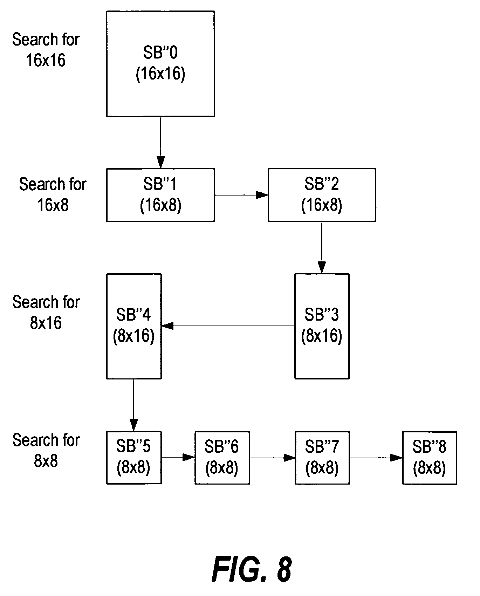

Returning to FIG. 5, at node 516, in the medium complexity search, the candidate blocks for some sub-blocks are known only after search is done for prior sub-blocks. For example, SB'4 candidate block can be determined only after searching SB'0. Similarly SB'7 candidate block will have to wait for SB'6 to be searched and SB'8 will have to wait for SB'6 and SB'8 to be searched. Again, this search is described as a "medium," complexity in comparison to the search shown in FIG. 6 which is based on macroblock level value assuming all sub-blocks have the same motion vector, and the search shown in FIG. 8 which is performed on a sub-block level and assumes each sub-block has a different motion vector.

FIG. 8 shows an example of a high complexity search process using sub-block level predictors. The search process shown in FIG. 8 presumes that each sub-block has its own motion vector. Accordingly, each sub-block includes a search to generate the associated cost value.

At node 518, the candidate blocks are again searched using sub-block predictor value(s) according to a high complexity search such as that shown in FIG. 8. In the high complexity search, every sub-block can search a different candidate block and a search of one sub-block can be started only after prior sub-block search (e.g., in-raster scan order) is performed.

Table 1 below summarizes the three searches described herein and shown in FIGS. 6, 7, and 8.

**TABLE 1**

| **Example** | **General Method** | **Relative Accuracy** | **Number of 16 by 16 searches** | **Number of 16 by 8 searches** | **Number of 8 by 16 searches** | **Number of 8 by 8 searches** |
|---|---|---|---|---|---|---|
| FIG. 6 | 16 by 16 macroblock predictor | Low | 1 | 0 | 0 | 0 |
| FIG. 7 | Sub-blocks 1, 3, and 5 based on 16 by 16 macroblock predictor | Medium | 1 | 1 | 1 | 3 |
| FIG. 8 | All unsearched sub-blocks based on individual predictor | High | 1 | 2 | 2 | 4 |

It should be noted that various search schemes may be devised and/or used with different number of searches for different block sizes based on the image to be searched as would be understood by one of skill in the art. For example, for larger frame size and higher frame rates (e.g., above a threshold), more searches such as those described with respect to FIG. 6 may be performed. For smaller frame size and lower frame rates (e.g., below a threshold), more searches such as those described with respect to FIGS. 7 and 8 may be performed. In some aspects, when multiple search schemes are used to search candidate blocks of a video, sum of absolute difference values generated from a low complexity search may be reused with the more accurate motion vector cost from higher complexity searches to gain a higher level of performance with a lower cycle count cost.

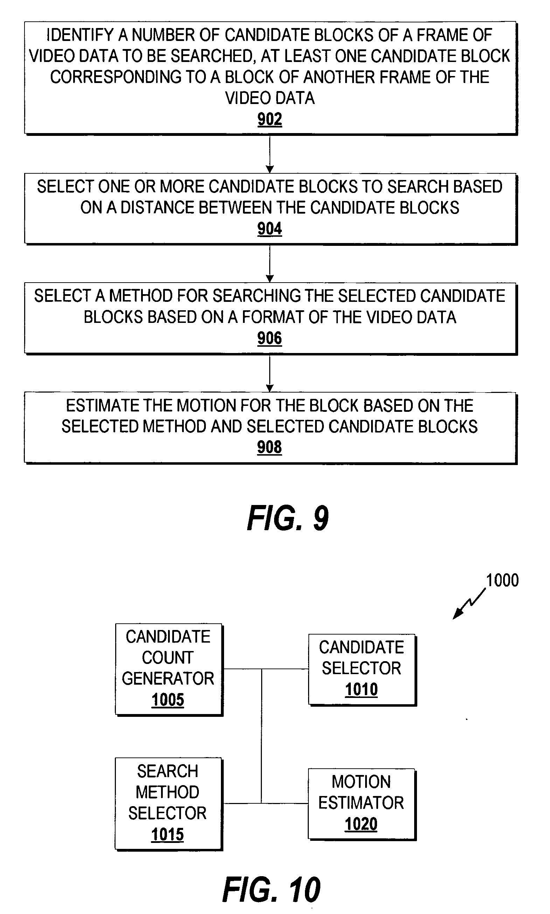

FIG. 9 illustrates a flowchart of an exemplary process 900 for searching candidate blocks. The process for searching may be performed by one or more of the devices described herein, such as the source device 12. It should be noted that the various steps described in the process 900 may be performed in a different order than illustrated and/or some steps may be added or removed as would be understood by one of skill in the art and the teachings of this disclosure.

At node 902, the number of candidate blocks to be searched for a video image is set/adjusted. The number of candidate blocks to be searched may be set based on, for example, the format of the video image (e.g., frame size, frame rate, etc.) so as to achieve a desired encoding time. At least one of the candidate blocks corresponds (e.g., matches) a block of another frame of the video data A match may not necessarily indicate equality, but that a given candidate block is the block most likely to correspond to the block for which motion estimation is being performed.

At node 904, one or more of the candidate blocks to search are selected based on a distance between the candidate blocks. As discussed above, some candidate blocks may be located close enough to a previously searched candidate blocks that the nearby candidate block may be excluded from the search. For example, certain blocks may not be searched due to spatial similarity due to other blocks, and therefore removed as candidate blocks.

At node 906, a method for searching the candidate blocks is selected based on a format of the video data The method may include one or more of the searches described with reference to FIGS. 6, 7, and 8.

At node 908, motion is estimated for the block based on the selected method and selected candidate blocks.

FIG. 10 illustrates a block diagram of an apparatus for performing motion estimation. The apparatus 1000 shows only some of the features that may be included in a device for performing motion estimation. The device 1000 includes a candidate count generator 1005, a candidate selector 1010, a search method selector 1015, and a motion estimator 1020.

The candidate count generator 1005 is configured to identify a number of candidate blocks of a frame of video data to be searched. The candidate count generator 1005 may include one or more of a processor, a memory, a frame rate detector, a frame size detector, and a video encoding method detector. In some implementations, means for identifying a number of candidate blocks may include the candidate count generator 1005.

The candidate selector 1010 is configured to select one or more of the candidate blocks to search based on a distance between the candidate blocks. The candidate selector 1010 may include one or more of a processor, a memory, and a comparator (e.g., block comparator). In some implementations, means for selecting one or more of the candidate blocks includes the candidate selector 1010.

The search method selector 1015 is configured to select a method for searching the selected candidate blocks based on a format of the video data The search method selector 1015 may include one or more of a processor, a memory, a comparator, a frame rate detector, a frame size detector, and a video format detector. Mean for selecting a method for searching, in some implementations, may include the search method selector 1015.

The motion estimator 1020 is configured to estimate motion for the block of the another frame based on the selected method and the selected candidate blocks. The motion estimator 1020 may include one or more of a processor, a memory, a comparator, an arithmetic unit, a difference engine (e.g., sum of absolute difference engine), and a transmitter configured to transmit the generated the motion estimation. Means for estimating the motion for the block of the another frame based on the selected method and the selected candidate blocks, in some implementations, may include the motion estimator 1020.

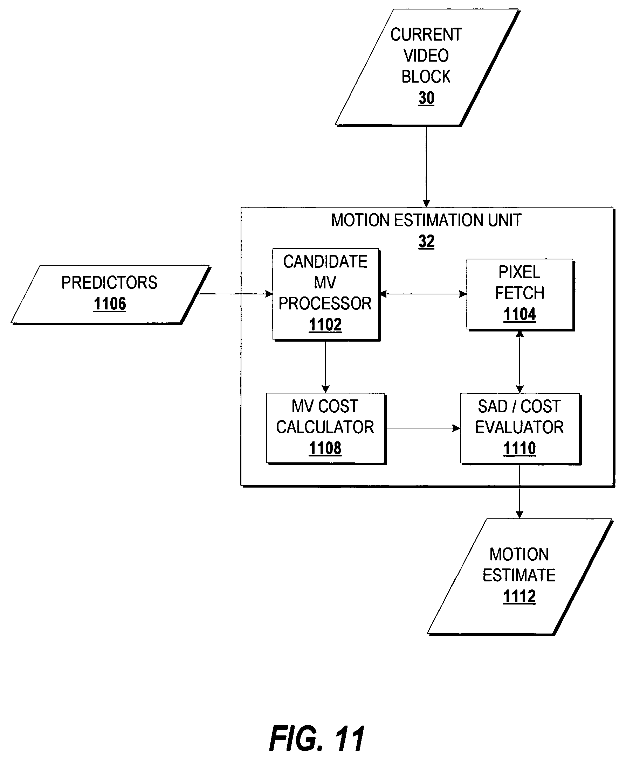

FIG. 11 illustrates a block diagram of a motion estimation unit including a candidate motion estimation processor. The candidate motion estimation processor 1102 may be similar to the apparatus 1000 shown and described in FIG. 10. The motion estimation unit 32 obtains the current video block 30 as described above. The current video block 30 is provided to the candidate motion vector (MV) processor 1102. For example, a pixel fetch 1104 may be configured to parse the current video block 30 and provide pixel values included therein. The candidate motion vector processor 1102 is configured to search candidate blocks for a portion of the video data corresponding to the current video block 30. This process is described above, for example, in FIGS. 5 and 9. The candidate motion vector processor 1102 may also receive predictors 1106. The predictors may include spatial, temporal, and/or subsampled predictors as discussed with reference to FIG. 4A.

The candidate motion vector processor 1102 provides motion vector values that identify candidate blocks to be searched.. The candidate motion vector processor 1102 shown is coupled with motion vector (MV) cost calculator 1108. The motion vector (MV) cost calculator 1108 is configured to generate a cost value associated with for a portion of the video data. These costs may be provided to a sum of absolute differences / cost evaluator 1110. The sum of absolute differences / cost evaluator 1110 may be configured to identify which of a plurality of calculated costs is most likely (e.g., a match) for a given portion of video data. The sum of absolute differences / cost evaluator 1110 may also be configured to generate a motion estimate 1112 for the current video block 30 based on the current video block and the candidate block identified by the candidate motion vector processor 1102 as the closest match for the current video block 30. The motion estimate 1112 may be used for further encoding processes as described above. For example, the motion estimate may be used for fractional searching.

It will be understood that the motion estimation unit 32 may include fewer or additional elements. To provide clarity of explanation, the motion estimation unit 32 is shown including features related to programmable and scalable integer search for video encoding.

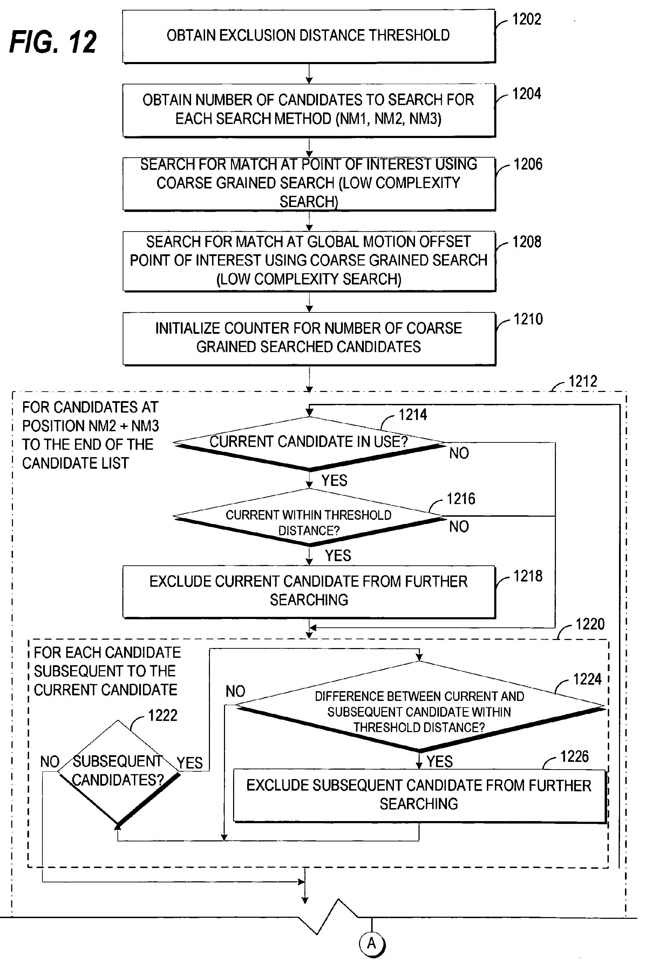

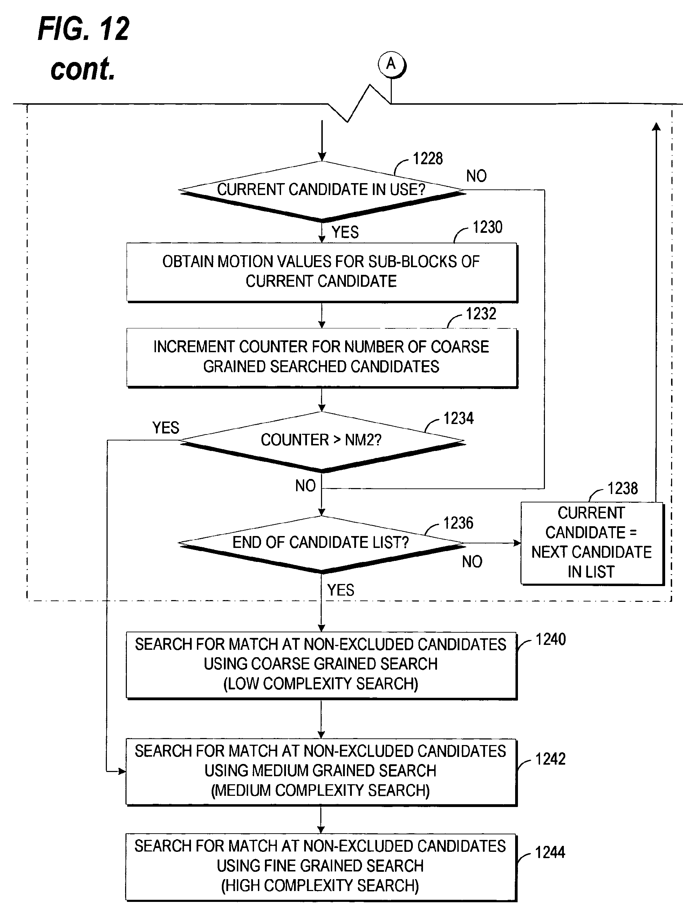

FIG. 12 illustrates a process diagram of an efficient search of candidate blocks. The process shown assumes that an ordering of candidate blocks has been previously determined. However, in some implementations, the ordering of candidate blocks may also be dynamically generated based on, for instance, the input video data.

At node 1202, an exclusion distance threshold is obtained. The exclusion distance threshold may be provided as an x-distance value and a y-distance value. In some implementations, the same exclusion distance threshold may be used as the x and y-distance values. As an example, the exclusion distance threshold may be 8.

At node 1204, values N_{M1}, N_{M2}, and N_{M3}, corresponding to the desired number of candidate blocks to search using the search schemes described with respect to FIGS. 6, 7, and 8, respectively, are obtained. The values may be obtained, for example, from a memory (e.g., preference/configuration set by a user), or automatically based on the coding scheme used for encoding the video data. The sum of the number of candidate blocks should not exceed the total number of candidate blocks of the candidate block ordering. As such, the number of candidate blocks may correspond to a range of candidate blocks in the ordering which will be searched by the corresponding method. For instance, if 20 candidate blocks are used for a particular search, N_{M1} may be 10, N_{M2} may be 4, and N_{M3} may be 1. In such a configuration, no more than 10 candidate blocks will be searched using a coarse grained method, no more than 4 candidate blocks will be searched using a medium grained method, and no more than 1 candidate block will be searched using the fine grained method.

At node 1206, an initial search is performed for at a point of interest. The point of interest generally corresponds to an initial candidate block located at a position likely to match the current block which the process is trying to find a match for. The search of node 1206 is a coarse grained search based on, for example, low complexity search. The coarse grained search may be similar to that described with reference to FIG. 6 above.

At node 1208, a coarse grained search may be performed for a candidate block located at an offset from the point of interest candidate block. The offset may be a global motion offset as described above. If there is no global offset or application of the offset results in the same candidate blocks searched for the point of interested at node 1206, the search at node 1208 may be omitted.

Having searched the point of interest candidate block and any possible offset at a high level, the process then turns to the treatment of the subsequent candidate blocks. Before searching each subsequent candidate block, the list of subsequent candidate blocks may be pruned to remove candidate blocks which are located within the distance threshold to another candidate block.

At node 1210, a counter for the number of coarse grained searches of candidate blocks is initialized. A sub-process 1212 is performed for a portion of the candidate blocks included in the ordering. As an example, if the number of candidate blocks in the ordering is 20, N_{M1} is 10, N_{M2} is 4, and N_{M3} is 1, the sub-process 1212 shown may be performed for candidate blocks 5 through 20.

At decision node 1214, it is determined whether the current candidate block is in use. The current candidate block corresponds to the candidate block of the portion of candidate blocks identified for sub-process 1212. The determination may be based on a flag value in a memory associated with the candidate block. If the candidate block is not in use, the process continues to sub-process 1220 as will be described below. If the candidate block has not been excluded from searching (e.g., is in use), the process continues to decision node 1216.

At decision node 1216, a determination is made as to whether the current distance of the current candidate block is within the threshold distance. For example, the determination may identify whether the x-motion vector value for the current candidate block is less than the x-distance threshold. The determination may be a composite whereby both x and y distances are compared. In some implementations, satisfying one comparison (e.g., x only or y only) may be sufficient to provide a determination.

If the current candidate is within the threshold distance, the current candidate block may be considered to have moved such a small distance to not be searched. At node 1218, the current candidate block is excluded from further searching. As discussed above, a flag associated with the current candidate block may be set to a value indicating the candidate block should be excluded from further searching. If the current candidate block is outside the threshold distance, the current candidate block may still be considered for possible match for the block under estimation.

Having checked the motion of the current candidate block relative to the threshold, sub-process 1220 is provided to compare the current candidate block to each of the subsequent candidate blocks (e.g., candidate blocks appearing in the order after the current candidate block) to determine whether any of the subsequent candidate blocks may be excluded from searching. This exclusion may also be based on the distance (e.g., distance threshold) between the current candidate block and the subsequent block.

The sub-process 1220 is performed for each candidate block in the ordering which appears subsequent to the current candidate block. As an example, if the number of candidate blocks in the ordering is 20, N_{M1} is 10, N_{M2} is 4, N_{M3} is 1, and the index of the current candidate block is 5, the sub-process 1220 shown may be performed for candidate blocks 6 through 20.

The sub-process 1220 includes a decision node 1222. The decision node 1222 determines if there are subsequent candidates to be processed. If at decision node 1222 it is determined that no further candidate blocks subsequent to the current candidate block are available, the sub-process 1220 ends. The process continues to node 1228 as will be described in further detail below.

Returning to decision node 1222, if subsequent candidate blocks exist, the difference between the current candidate block and the subsequent candidate block being processed by the sub-process 1220 is compared to the threshold distance at decision node 1224. In some implementations, this may include taking the absolute value of the difference between x and/or y motion values for the two blocks.

If it is determined that the distance is within the threshold, at node 1226, the subsequent candidate block is excluded from further searching. As discussed above, a flag associated with the subsequent candidate block being processed may be set to a value indicating the candidate block should be excluded from further searching. If, at decision node 1224, it is determined that the distance between the subsequent candidate block and the current candidate block is outside the threshold, the subsequent candidate block remains in use and the process returns to decision node 1222 as described above.

Once the sub-process 1220 has processed each subsequent candidate block, at decision node 1228, a determination is made as to whether the current candidate block is still in use. The prior processing may have indicated that the current candidate block is no longer in use based on its motion information or a comparison motion with other candidate blocks. If the current candidate block is no longer in use, the process continues to node 1236 as will be described below. If the current candidate block is still in use, at node 1230, motion values for sub-blocks of the current candidate block are obtained. For example, a sum of the absolute differences engine may be used to generate the motion values. At node 1232, the coarse grained search counter is incremented. At decision node 1234, if the counter exceeds the number of candidate blocks associated with the medium grained search (N_{M2}), the process skips further processing and continues to node 1242 as will be described in further detail below.

If the counter does not exceed N_{M2}, the process continues to decision node 1236. If the candidate block order includes additional candidate blocks, the current candidate block is set to the next candidate block in the order. The sub-process 1212 then returns to decision node 1214 as described above. If the candidate block order list has been completely processed by sub-process 1212, the sub-process 1212 ends and the process continues to node 1240.

At node 1240, non-excluded candidates are searched continuing down the order until the specified number of coarse grained searches are performed. At node 1242, non-excluded candidates are searched possible match for the block under estimation for a possible match to the block currently under estimation. The medium grained search generally refers to the use of shared sub-block level predictors for the searching. The search at node 1242 may be according to the search shown and described with reference to FIG. 7.

At node 1244, non-excluded candidates are searched using a fine grained search. The fine grained search generally refers to a search where predictors for each sub-block of the candidate block are used. The search at node 1244 may be according to the search shown and described with reference to FIG. 8.

Experimental implementations of the described motion estimation produced several improvements over the existing encoders which perform motion estimation. Table 2 presents examples of average bit rate losses for encoders as compared to a common reference encoder. The improvements in bit rate loss as compared to other encoders are just one non-limiting measure of the effectiveness of the disclosed aspects.

**TABLE 2**

| | 720p Encoder | 1080p Encoder | Programmable and Scalable Encoder |
|---|---|---|---|
| Average bit rate loss compared to reference encoder for seven (7) 1080p source videos | n/a | 27.11 | 2.36 |
| Average bit rate loss compared to reference encoder for four (4) 720p source videos | 31.95 | 18.27 | -1.36 |
| Average bit rate loss compared to reference encoder for three (3) common image format (CIF) source videos | 31.73 | 18.14 | 3.487 |
| Average bit rate loss compared to reference encoder for a video graphics array (VGA) source video | 38.2 | 39.58 | 1.56 |
| Overall Average | 35.89 | 23.79 | 1.54 |

As used herein, the terms "determine" or "determining" encompass a wide variety of actions. For example, "determining" may include calculating, computing, processing, deriving, investigating, looking up (e.g., looking up in a table, a database or another data structure), ascertaining and the like. Also, "determining" may include receiving (e.g., receiving information), accessing (e.g., accessing data in a memory) and the like. Also, "determining" may include resolving, selecting, choosing, establishing and the like.

As used herein, the terms "provide" or "providing" encompass a wide variety of actions. For example, "providing" may include storing a value in a location for subsequent retrieval, transmitting a value directly to the recipient, transmitting or storing a reference to a value, and the like. "Providing" may also include encoding, decoding, encrypting, decrypting, validating, verifying, and the like.

As used herein, a phrase referring to "at least one of' a list of items refers to any combination of those items, including single members. As an example, "at least one of: a, b, or c" is intended to cover: a, b, c, a-b, a-c, b-c, and a-b-c.

Those of skill in the art would understand that information and signals may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, or any combination thereof.

Those of skill in the art would further appreciate that the various illustrative logical blocks, modules, circuits, and algorithm steps described in connection with the embodiments disclosed herein may be implemented as electronic hardware, computer software, or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present invention.

The techniques described herein may be implemented in hardware, software, firmware, or any combination thereof. Such techniques may be implemented in any of a variety of devices such as general purposes computers, wireless communication device handsets, or integrated circuit devices having multiple uses including application in wireless communication device handsets and other devices. Any features described as modules or components may be implemented together in an integrated logic device or separately as discrete but interoperable logic devices. If implemented in software, the techniques may be realized at least in part by a computer-readable data storage medium comprising program code including instructions that, when executed, performs one or more of the methods described above. The computer-readable data storage medium may form part of a computer program product, which may include packaging materials. The computer-readable medium may comprise memory or data storage media, such as random access memory (RAM) such as synchronous dynamic random access memory (SDRAM), read-only memory (ROM), non-volatile random access memory (NVRAM), electrically erasable programmable read-only memory (EEPROM), FLASH memory, magnetic or optical data storage media, and the like. The computer-readable medium may be a non-transitory storage medium The techniques additionally, or alternatively, may be realized at least in part by a computer-readable communication medium that carries or communicates program code in the form of instructions or data structures and that can be accessed, read, and/or executed by a computer, such as propagated signals or waves.

The program code may be executed by a processor, which may include one or more processors, such as one or more digital signal processors (DSPs), general purpose microprocessors, an application specific integrated circuits (ASICs), field programmable logic arrays (FPGAs), or other equivalent integrated or discrete logic circuitry. Such a processor may be configured to perform any of the techniques described in this disclosure. A general purpose processor may be a microprocessor; but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration. Accordingly, the term "processor," as used herein may refer to any of the foregoing structure, any combination of the foregoing structure, or any other structure or apparatus suitable for implementation of the techniques described herein. In addition, in some aspects, the functionality described herein may be provided within dedicated software modules or hardware modules configured for encoding and decoding, or incorporated in a combined video encoder-decoder (CODEC)

The methods disclosed herein comprise one or more steps or actions for achieving the described method. The method steps and/or actions may be interchanged with one another without departing from the scope of the claims. In other words, unless a specific order of steps or actions is specified, the order and/or use of specific steps and/or actions may be modified without departing from the scope of the claims.

Various embodiments of the invention have been described. These and other embodiments are within the scope of the following claims.

## Claims

1. A method (900) for performing motion estimation, the method comprising:
identifying (902) a size of a set of candidate blocks of a frame of video data to be searched, at least one candidate block corresponding to a block of another frame of the video data;
selecting (904) a set of candidate blocks to search, the selected set including an initial number of candidate blocks equal to the size, the selecting comprising excluding a candidate block from the set based on a distance between the candidate block and a previously searched block, the set including at least one candidate block corresponding to a block of another frame of the video data;
selecting (906) a search complexity level for searching the selected candidate blocks based on a format of the video data;
identifying (908) an estimation block from the selected candidate blocks, the identification performed according to a search method of the selected complexity level; and
estimating the motion for the block of the another frame based on the estimation block.

2. The method of Claim 1, further comprising: identifing an order in which to search the candidate blocks.

3. The method of any one of Claims 1 or 2, wherein the size of the set of candidate blocks is identified based on:
a) a desired encoding time; or
b) the format of the video data.

4. The method of any one of Claims 1 to 3, wherein the format of the video data comprises at least one of a size of the frame and a frame rate of the video data.

5. The method of Claim 4, wherein the size of the set of candidate blocks is identified based on a comparison between the size of the frame and a frame size threshold.

6. The method of Claim 5, wherein the size of the set of candidate blocks is proportional to the size of the frame subtracted from the frame size threshold.

7. The method of any one of Claims 4 to 6, wherein the size of the set of candidate blocks is identified based on a comparison between the frame rate and a frame rate threshold.

8. The method of Claim 7, wherein the size of the set of candidate blocks is proportional to the frame rate subtracted from the frame rate threshold.

9. The method of any one of Claims 1 to 8, wherein a candidate block is selected to search if the distance between the candidate block and another candidate block is greater than a configurable value.

10. The method of Claim 9, wherein the distance comprises a motion value.

11. The method of any one of Claims 1 to 10, wherein selecting the complexity level for searching is based on a comparison between the size of the frame and a frame size threshold.

12. The method of Claim 11, wherein selecting the complexity for searching is based on a comparison between the frame rate and a frame rate threshold.

13. The method of any one of Claims 1 to 12, wherein the order is set based on a coding scheme used to encode the video data.

14. An apparatus (1000) for performing motion estimation, the apparatus comprising:
means (1005) for identifying a size of a set of candidate blocks of a frame of video data to be searched;
means (1010) for selecting a set of candidate blocks to search, the selected set including an initial number of candidate blocks equal to the size, the selecting comprising excluding a candidate block from the set based on a distance between the candidate block and a previously searched block, the set including at least one candidate block corresponding to a block of another frame of the video data;
means (1015) for selecting a search complexity level for searching the selected candidate blocks based on a format of the video data; and
means (1020) for identifying an estimation block from the selected candidate blocks, the identification performed according to a search method of the selected complexity level and for estimating the motion for the block of the another frame based on the estimation block.

15. A computer-readable storage medium comprising instructions, the instructions causing an apparatus to carry out the method of any of claims 1 to 13.

## Patentansprüche

1. Verfahren (900) zum Durchführen einer Bewegungsschätzung, wobei das Verfahren Folgendes beinhaltet:
Identifizieren (902) einer Größe eines Satzes von Kandidatenblöcken eines Frame von zu durchsuchenden Videodaten, wobei wenigstens ein Kandidatenblock einem Block eines anderen Frame der Videodaten entspricht;
Auswählen (904) eines Satzes von zu durchsuchenden Kandidatenblöcken, wobei der gewählte Satz eine Anfangszahl von gleichgroßen Kandidatenblöcken beinhaltet, wobei die Auswahl das Ausschließen eines Kandidatenblocks aus dem Satz auf der Basis einer Distanz zwischen dem Kandidatenblock und einem zuvor durchsuchten Block beinhaltet, wobei der Satz wenigstens einen Kandidatenblock enthält, der einem Block eines anderen Frame der Videodaten entspricht;
Auswählen (906) eines Suchkomplexitätsniveaus zum Durchsuchen der gewählten Kandidatenblöcke auf der Basis eines Formats der Videodaten;
Identifizieren (908) eines Schätzblocks unter den gewählten Kandidatenblöcken, wobei die Identifikation mit einem Suchverfahren des gewählten Komplexitätsniveaus erfolgt; und
Schätzen der Bewegung für den Block des anderen Frame auf der Basis des Schätzblocks.

2. Verfahren nach Anspruch 1, das ferner das Identifizieren einer Reihenfolge beinhaltet, in der die Kandidatenblöcke durchsucht werden.

3. Verfahren nach Anspruch 1 oder 2, wobei die Größe des Satzes von Kandidatenblöcken identifiziert wird auf der Basis:
a) einer gewünschten Encodierungszeit; oder
b) des Formats der Videodaten.

4. Verfahren nach Anspruch 1 bis 3, wobei das Format der Videodaten eine Größe des Frame und/oder eine Frame-Rate der Videodaten beinhaltet.

5. Verfahren nach Anspruch 4, wobei die Größe des Satzes von Kandidatenblöcken auf der Basis eines Vergleichs zwischen der Größe des Frame und einer Frame-Größenschwelle identifiziert wird.

6. Verfahren nach Anspruch 5, wobei die Größe des Satzes von Kandidatenblöcken proportional zur Größe des Frame subtrahiert von der Frame-Größenschwelle ist.

7. Verfahren nach einem der Ansprüche 4 bis 6, wobei die Größe des Satzes von Kandidatenblöcken auf der Basis eines Vergleichs zwischen der Frame-Rate und einer Frame-Ratenschwelle identifiziert wird.

8. Verfahren nach Anspruch 7, wobei die Größe des Satzes von Kandidatenblöcken proportional zu der von der Frame-Ratenschwelle subtrahierten Frame-Rate ist.

9. Verfahren nach einem der Ansprüche 1 bis 8, wobei ein Kandidatenblock zum Durchsuchen ausgewählt wird, wenn die Distanz zwischen dem Kandidatenblock und einem anderen Kandidatenblock größer ist als ein konfigurierbarer Wert.

10. Verfahren nach Anspruch 9, wobei die Distanz einen Bewegungswert umfasst.

11. Verfahren nach einem der Ansprüche 1 bis 10, wobei das Auswählen des Komplexitätsniveaus für die Suche auf einem Vergleich zwischen der Größe des Frame und einer Frame-Größenschwelle basiert.

12. Verfahren nach Anspruch 11, wobei das Auswählen der Suchkomplexität auf einem Vergleich zwischen der Frame-Rate und einer Frame-Ratenschwelle basiert.

13. Verfahren nach einem der Ansprüche 1 bis 12, wobei die Reihenfolge auf der Basis eines zum Encodieren der Videodaten benutzten Codierungsschemas festgelegt wird.

14. Vorrichtung (1000) zum Durchführen einer Bewegungsschätzung, wobei die Vorrichtung Folgendes umfasst:
Mittel (1005) zum Identifizieren einer Größe eines Satzes von Kandidatenblöcken eines Frame von zu durchsuchenden Videodaten;
Mittel (1010) zum Auswählen eines Satzes von zu durchsuchenden Kandidatenblöcken, wobei der gewählte Satz eine Anfangszahl von gleichgroßen Kandidatenblöcken beinhaltet, wobei die Auswahl das Ausschließen eines Kandidatenblocks aus dem Satz auf der Basis einer Distanz zwischen dem Kandidatenblock und einem zuvor durchsuchten Block beinhaltet, wobei der Satz wenigstens einen Kandidatenblock enthält, der einem Block eines anderen Frame der Videodaten entspricht;
Mittel (1015) zum Auswählen eines Suchkomplexitätsniveaus zum Durchsuchen der gewählten Kandidatenblöcke auf der Basis eines Formats der Videodaten; und
Mittel (1020) zum Identifizieren eines Schätzblocks unter den gewählten Kandidatenblöcken, wobei die Identifikation gemäß einem Suchverfahren des gewählten Komplexitätsniveaus und zum Schätzen der Bewegung für den Block des anderen Frame auf der Basis des Schätzblocks erfolgt.

15. Computerlesbares Speichermedium, das Befehle umfasst, wobei die Befehle bewirken, dass eine Vorrichtung ein Verfahren nach einem der Ansprüche 1 bis 13 ausführt.

## Revendications

1. Procédé (900) d'exécution d'une estimation de mouvement, le procédé comprenant :
l'identification (902) d'une taille d'un ensemble de blocs candidats d'une trame de données vidéo à rechercher, au moins un bloc candidat correspondant à un bloc d'une autre trame des données vidéo ;
la sélection (904) d'un ensemble de blocs candidats à rechercher, l'ensemble sélectionné comportant un nombre initial de blocs candidats égal à la taille, la sélection comprenant l'exclusion d'un bloc candidat de l'ensemble d'après une distance entre le bloc candidat et un bloc recherché précédemment, l'ensemble comportant au moins un bloc candidat correspondant à un bloc d'une autre trame des données vidéo ;
la sélection (906) d'un niveau de complexité de recherche pour rechercher les blocs candidats sélectionnés d'après un format des données vidéo ;
l'identification (908) d'un bloc d'estimation parmi les blocs candidats sélectionnés, l'identification étant exécutée conformément à un procédé de recherche du niveau de complexité sélectionné ; et
l'estimation du mouvement du bloc de l'autre trame d'après le bloc d'estimation.

2. Procédé selon la revendication 1, comprenant en outre : l'identification d'un ordre dans lequel effectuer la recherche des blocs candidats.

3. Procédé selon l'une quelconque des revendications 1 ou 2, dans lequel la taille de l'ensemble de blocs candidats est identifiée d'après :
a) un temps de codage souhaité ; ou
b) le format des données vidéo.

4. Procédé selon l'une quelconque des revendications 1 à 3, dans lequel le format des données vidéo comprend au moins l'un d'une taille de la trame et d'une fréquence de trames des données vidéo.

5. Procédé selon la revendication 4, dans lequel la taille de l'ensemble de blocs candidats est identifiée en fonction d'une comparaison entre la taille de la trame et un seuil de taille de trame.

6. Procédé selon la revendication 5, dans lequel la taille de l'ensemble de blocs candidats est proportionnelle à la taille de la trame soustraite du seuil de taille de trame.

7. Procédé selon l'une quelconque des revendications 4 à 6, dans lequel la taille de l'ensemble de blocs candidats est identifiée d'après une comparaison entre la fréquence de trames et un seul de fréquence de trames.

8. Procédé selon la revendication 7, dans lequel la taille de l'ensemble de blocs candidats est proportionnelle à la fréquence de trames soustraite du seuil de fréquence de trames.

9. Procédé selon l'une quelconque des revendications 1 à 8, dans lequel un bloc candidat est sélectionné en vue de sa recherche si la distance entre le bloc candidat et un autre bloc candidat est supérieure à une valeur configurable.

10. Procédé selon la revendication 9, dans lequel la distance comprend une valeur de mouvement.

11. Procédé selon l'une quelconque des revendications 1 à 10, dans lequel la sélection du niveau de complexité de recherche est basée sur une comparaison entre la taille de la trame et un seuil de taille de trame.

12. Procédé sur la revendication 11, dans lequel la sélection de la complexité de recherche est basée sur une comparaison entre la fréquence de trames et un seuil de fréquence de trames.

13. Procédé selon l'une quelconque des revendications 1 à 12, dans lequel l'ordre est établi en fonction d'un mécanisme de codage utilisé pour coder les données vidéo.

14. Appareil (1000) d'exécution d'une estimation de mouvement, l'appareil comprenant :
un moyen (1005) d'identification d'une taille d'un ensemble de blocs candidats d'une trame de données vidéo à rechercher ;
un moyen (1010) de sélection d'un ensemble de blocs candidats à rechercher, l'ensemble sélectionné comportant un nombre initial de blocs candidats égal à la taille, la sélection comprenant l'exclusion d'un bloc candidat de l'ensemble en fonction d'une distance entre le bloc candidat et un bloc recherché précédemment, l'ensemble comportant au moins un bloc candidat correspondant à un bloc d'une autre trame des données vidéo,
un moyen (1015) de sélection d'un niveau de complexité de recherche pour rechercher les blocs candidats sélectionnés en fonction d'un format des données vidéo ; et
un moyen (1020) d'identification d'un bloc d'estimation parmi les blocs candidats sélectionnés, l'identification étant exécutée conformément à un procédé de recherche du niveau de complexité sélectionné et d'estimation du mouvement du bloc de l'autre trame d'après le bloc d'estimation.

15. Support de mémorisation lisible par ordinateur comprenant des instructions, les instructions amenant un appareil à exécuter le procédé selon l'une quelconque des revendications 1 à 13.
